# NOUVEAU FASCICULE DE BREVET EUROPEEN

(11) **EP 2 769 804 B2**
(45) Date de publication et mention de la décision concernant l'opposition: **12.06.2019**
(45) Mention de la délivrance du brevet: 15.06.2016
(21) Numéro de dépôt: 14156081.3
(22) Date de dépôt: 21.02.2014
(51) Int. Cl.: B29C 45/64, B25B 11/00

(54) **Procédé de contrôle du bridage magnétique d'une pièce et dispositif de bridage magnétique utilisant un tel procédé**
Kontrollverfahren für Magnetspannung eines Werkstücks, und Magnetspannvorrichtung , die ein solches Verfahren anwendet
Method for controlling the magnetic clamping of a part and magnetic clamping device using such a method

(30) Priorité: 22.02.2013 FR 1351577
(43) Date de publication de la demande: 27.08.2014
(73) Titulaire: STÄUBLI FAVERGES, 74210 Faverges (FR)
(72) Inventeur: Tiberghien, Alain-Christophe, 74320 Sevrier (FR); Puget, Sylvain, 74210 Seythenex (FR); Chachereau, Sylvain, 74210 Doussard (FR)
(74) Mandataire: Lavoix

(56) Documents cités:
- EP-A1- 1 867 437
- WO-A2-03/009972
- US-A1- 2010 092 587

## Description

La présente invention a trait à un procédé de contrôle du bridage magnétique d'une pièce et à un dispositif de bridage utilisant un tel procédé.

La technologie de bridage magnétique est utilisée dans différents domaines, tels que celui du moulage par injection de matière plastique, et plus généralement dans de nombreuses installations industrielles nécessitant le bridage d'une pièce, telle qu'une presse à injecter disposant d'un moule à brider, avec un effort important réversible et contrôlé. Dans le domaine de l'injection plastique, l'automatisation des procédures devient un élément important afin d'alléger les temps opératoires et de sécuriser les manoeuvres d'un moule entre les phases d'injection plastique.

Un enjeu persistant reste de rendre moins contraignantes les différentes opérations effectuées par l'opérateur en présence de charges lourdes et dangereuses et dans un environnement industriel difficile en termes d'espace, de chaleur et de vapeurs chimiques.

Il est connu de EP-A-1 419 034 de créer un environnement de surveillance des conditions de bridage d'un moule en détectant des changements globaux de flux magnétique d'une plaque magnétique. Le dispositif proposé peut prévenir l'opérateur lorsque le changement global du flux magnétique dépasse un seuil d'alerte déterminé. Ce procédé de contrôle du dispositif ne considère que des formes de pièces à brider simples, c'est-à-dire des surfaces en regard de la plaque magnétique qui sont, par exemple, de forme rectangulaire ou circulaire voire polygonale. Ainsi, les écarts de flux calculés à partir du flux magnétique mesuré sont calculés seulement de manière globale pour la plaque de bridage, à partir de dimensions grossières.

Il est également connu de EP-A-1 867 437 d'ajouter à des systèmes de plots magnétiques, compris dans une plaque magnétique, des bobines connectées en série à un circuit de mesure relié à une unité de contrôle pour mesurer des flux magnétiques dans la plaque magnétique. Le dispositif proposé présente des bobinages autour de chaque plot magnétique qui permettent de réaliser un premier circuit de mesure du flux magnétique traversant quatre plots magnétiques de références, normalement couverts, et un deuxième circuit de mesure du flux magnétique traversant les plots restants qui recueille la somme des mesures de l'ensemble des bobines. Cette disposition permet de déduire uniquement la couverture globale de la plaque par la pièce à brider et de calculer le flux magnétique, de façon globale, de la plaque magnétique.

Il est également connu de WO-A-2008/105042 de munir une plaque magnétique de capteurs de proximité qui détectent le début du basculement vertical de la pièce, lorsque le bridage n'est plus sécurisé. Ce dispositif ne permet pas d'anticiper le basculement de la pièce sans avoir décroché le moule et désécurisé l'installation, mais seulement de réagir à ce basculement.

C'est à ces inconvénients qu'entend plus particulièrement remédier l'invention en proposant un nouveau procédé de contrôle du bridage magnétique d'une pièce qui fiabilise, sécurise le bridage et répond aux nouvelles normes en vigueur.

A cet effet, l'invention concerne un procédé de contrôle du bridage magnétique d'une pièce dans un dispositif de bridage magnétique d'une installation industrielle comprenant, une unité de contrôle du bridage magnétique, une plaque de bridage sur laquelle est positionnée la pièce à brider, plusieurs plots magnétiques logés dans cette plaque, les plots étant reliés à des circuits de mesure du flux magnétique définissant des zones de mesure et à des circuits de puissance permettant de magnétiser ou démagnétiser les plots. Conformément à l'invention, le procédé comprend préalablement
- a) une étape consistant à déterminer au moins deux zones de traitement définies chacune par au moins une zone de mesure,
- b) une étape qui consiste à définir une surface de la plaque de bridage en contact avec la pièce à brider.

Puis le procédé comprend pour chaque zone de traitement, des étapes consistant à :
- c) identifier un ou des plots magnétiques compris dans la surface de la plaque de bridage en contact avec la pièce à brider,
- d) mesurer le flux magnétique produit par le ou les plots identifiés à l'étape c),
- e) calculer un effort magnétique réel de bridage sur la base de la mesure de l'étape d), de la définition de la surface en contact faite à l'étape b) et de l'identification des plots faite à l'étape c),
- f) calculer un effort magnétique théorique grâce à la définition de la surface en contact faite à l'étape b) et l'identification des plots faite à l'étape c),
- g) comparer l'effort magnétique réel de bridage et l'effort magnétique théorique calculés aux étapes e) et f), et
- m) établir que le résultat de la comparaison réalisé à l'étape g) satisfait un critère d'arrêt correspondant à la détection d'un défaut de magnétisation d'une zone de traitement ou d'un risque de basculement de la pièce à brider.

Grâce à l'invention, la connaissance des conditions de bridage est optimisée, la détection de situations de basculement est améliorée, les anomalies de mauvaises détections ou les erreurs de non détection sont diminuées, les risques d'incident sont limités et l'efficacité du système homme/machine pour les opérations de changement de pièce à brider est améliorée. En effet, la division du support de bridage en plusieurs circuits de mesure, et la bonne identification des plots magnétiques couverts ou non couverts par la pièce à brider permettent d'obtenir une mesure précise des pertes magnétiques réelles et du ratio couple de maintien réel sur couple de basculement.

Selon des aspects avantageux mais non obligatoires de l'invention, un tel procédé peut incorporer une ou plusieurs des caractéristiques suivantes, prises dans toute combinaison techniquement admissible :
- Le procédé comporte des étapes consistant pour chaque zone de traitement, à :
   - h) calculer un point d'application de l'effort magnétique réel en considérant le barycentre des surfaces couvertes des plots identifiés à l'étape c),
   - i) calculer un couple de maintien de l'effort magnétique réel à partir des résultats des calculs des étapes e) et h).
- Le procédé comporte des étapes consistant à :
   - j) calculer le couple théorique de basculement de la pièce sur la base de paramètres caractéristiques de la pièce à brider et de paramètres caractéristiques de la plaque de bridage,
   - k) comparer une somme des couples de maintien des efforts magnétiques réels calculés pour chaque zone de traitement au cours de l'étape i) au couple (K) théorique de basculement calculé à l'étape j).
- Le procédé comporte des étapes consistant à :
   - n) activer un moyen d'alerte ou d'affichage sur l'installation si le critère d'arrêt est satisfait lors de l'étape m),
   - o) signaler la zone de traitement à un équipement de l'installation si le critère d'arrêt correspondant à la détection d'un défaut de magnétisation de cette zone de traitement est satisfait lors de l'étape l).
- Au cours de l'étape d), la température est mesurée par un capteur au niveau de la surface de bridage pour chaque zone de mesure, et au cours de l'étape e), l'effort magnétique de bridage réel corrigé de l'influence de la température mesurée est aussi calculé, pour chaque zone de mesure.
- Avant l'étape b) un système extérieur au dispositif de bridage, comprenant une représentation de la pièce et de la plaque de bridage mémorise des paramètres caractéristiques de la pièce à brider et de la plaque de bridage et lors de l'étape b) le système extérieur communique la définition de la surface de la plaque de bridage en contact avec la pièce à brider à l'unité de contrôle de bridage magnétique.
- Au cours de l'étape h), un système extérieur au dispositif de bridage calcule le point d'application de l'effort magnétique théorique pour chacune des zones de traitement et communique ce point d'application à l'unité de contrôle du bridage magnétique.
- Le procédé consiste à sauvegarder sur un support d'enregistrement les résultats de calculs et de comparaisons des efforts théoriques et des efforts magnétiques réels de bridage par zone de traitement.

L'invention concerne également un dispositif de bridage magnétique comprenant des moyens destinés à mettre en oeuvre un procédé tel que mentionné ci-dessus, la plaque de bridage comprenant au moins deux circuits de mesure disposés l'un au-dessus de l'autre par rapport à un plan perpendiculaire au poids de la pièce à brider.

Selon des aspects avantageux mais non obligatoires de l'invention, un tel dispositif de bridage peut incorporer une ou plusieurs des caractéristiques suivantes, prises dans toute combinaison techniquement admissible :
- le dispositif comprend quatre circuits de mesure, qui divisent la plaque de bridage en quatre zones de traitement,
- le dispositif comprend un circuit de mesure par plot.

L'invention sera mieux comprise et d'autres avantages de celle-ci apparaîtront plus clairement à la lumière de la description qui va suivre d'un procédé de contrôle du bridage magnétique d'une pièce et d'un dispositif de bridage magnétique utilisant un tel procédé, donnée uniquement à titre d'exemple et faite en se référant aux dessins annexés dans lesquels :

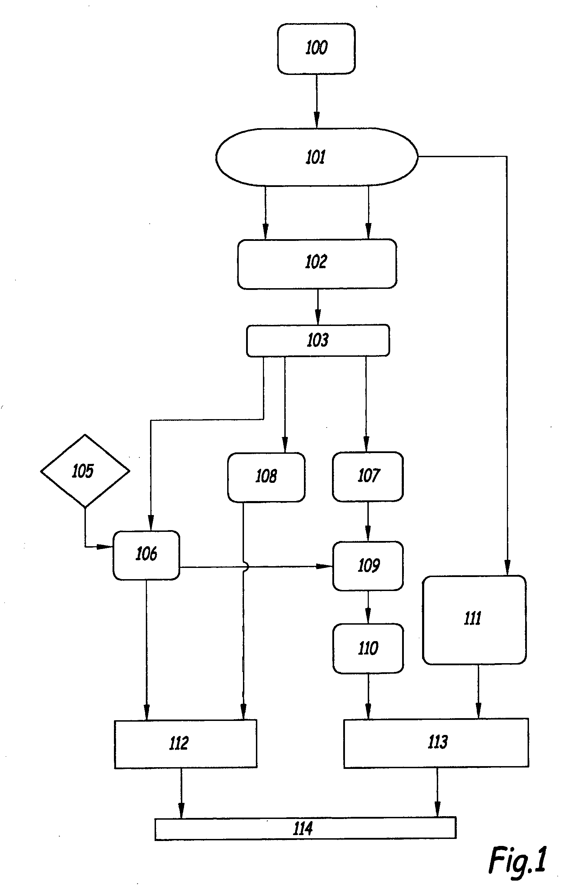

- la figure 1 est un schéma bloc représentant un procédé conforme à l'invention de contrôle du bridage magnétique d'une pièce ;
- la figure 2 est une vue en perspective d'une machine de moulage par injection comprenant un dispositif de bridage magnétique conforme à l'invention ;
- la figure 3 est une vue de face à plus grande échelle de la face de bridage d'une plaque du dispositif de bridage magnétique visible à la figure 2, les connexions internes à la plaque étant représentées en traits forts ;
- la figure 4 est une vue en perspective de la face de bridage de la plaque visible à la figure 2 sur laquelle est positionné un moule ;
- la figure 5 est une vue analogue à la figure 3, à plus grande échelle, sur laquelle est représentée une surface de contact d'un moule avec la plaque de bridage et ses plots magnétiques.

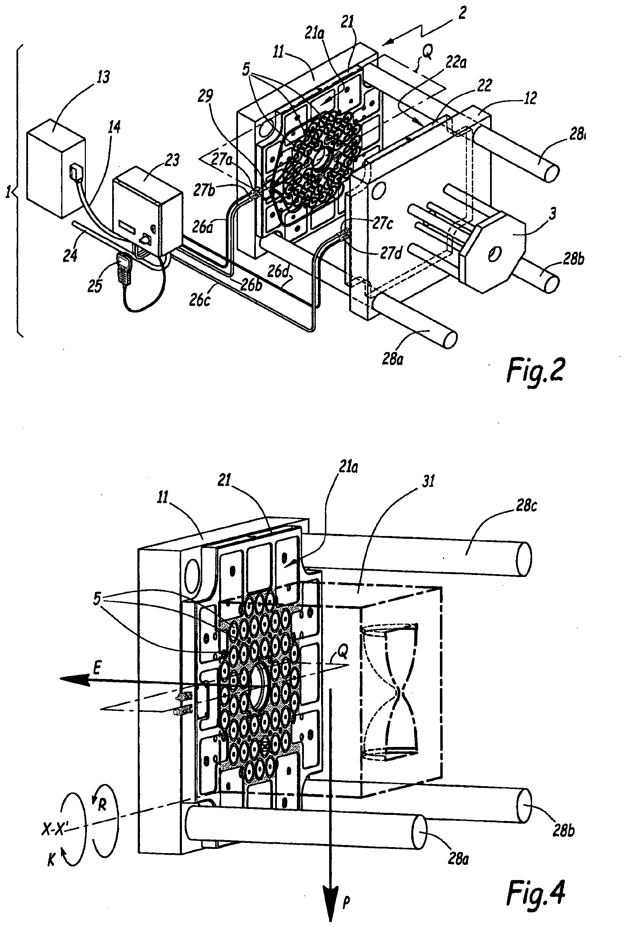

La machine 1 de moulage par injection représentée à la figure 2 comprend deux plateaux 11 et 12 de presse disposés en regard l'un de l'autre, l'un de ces plateaux 12 étant mobile en translation par rapport à l'autre 11. La machine 1 est équipée d'un dispositif 2 de bridage magnétique comprenant deux plaques 21 et 22 de bridage, fixées respectivement sur les plateaux 11 et 12, au niveau des faces en regard de ces plateaux. Chaque plaque 21, 22 comporte des plots magnétiques 5 qui comportent une carcasse, constituée en un matériau isolant, tel qu'une matière plastique, qui englobe au niveau de sa base un aimant permanent globalement cylindrique, constitué dans un matériau faiblement coercitif tel que un alliage AINiCo. Les plots magnétiques 5 sont logés dans la plaque 21, 22 et affleurant par rapport à une face 21 a, 22a de bridage de la plaque 21,22 orientée vers l'autre plaque. La face 22a n'est pas directement visible à la figure 2 mais repérée par ses arêtes. Un pôle externe destiné à être affleurant par rapport à la face 21 a, 22a de bridage est logé au-dessus de l'aimant permanent de chaque plot magnétique 5. Ce pôle reçoit, le long de sa paroi latérale externe, des aimants permanents en forme de portion d'anneau cylindrique, chaque aimant étant polarisé radialement par rapport au plot 5. Plus précisément, chaque plot 5 comporte cinq aimants qui se logent dans des fenêtres de la carcasse. Ceux-ci sont constitués dans un matériau à aimantation permanente tel que du Néodyme, ou un autre matériau hautement coercitif, et maintenus en place sur le pôle externe ferromagnétique par attraction magnétique.

Le plateau 12 comprend sur sa face arrière opposée à sa face de bridage 22a un organe mobile 3 permettant l'éjection des pièces injectées.

Le dispositif 2 comprend également une unité 23 de contrôle du bridage, qui comporte notamment un câble d'alimentation 24, un terminal 25, un calculateur et un ou plusieurs modules de puissance non représentés. Le calculateur est, pour sa part, pourvu de mémoires de données. L'unité 23 de contrôle du bridage est reliée à chaque plaque 21, 22 au moyen de deux câbles 26a, 26b, 26c, 26d connectés aux plaques 21 et 22 par l'intermédiaire respectivement de deux connecteurs 27a, 27b, 27c, 27d. De plus, l'unité 23 de contrôle du bridage est reliée à une unité 13 de contrôle de la presse au moyen d'un câble 14. Une partie 31 d'un moule, représenté partiellement en traits d'axe uniquement à la figure 4 et constitué en matériau ferromagnétique, est immobilisée contre la plaque 21 par bridage magnétique. Le moule est en deux parties, et destiné à être placé entre les deux plaques 21 et 22 et à être immobilisé contre ces plaques par bridage magnétique. Chaque partie du moule est bridée sur une des deux plaques de bridage 21,22. Lorsque le moule est ainsi bridé entre les plaques 21 et 22, le mouvement de retrait du plateau 12 mobile entraîne l'ouverture du moule. A la figure 4, la partie de moule immobilisée contre la plaque 22 n'est pas représentée, de même que la plaque 22.

A la figure 4, on peut visualiser l'effort de retenue global E exercé par la plaque de bridage 21 sur la partie 31. De plus, le poids P de la partie 31 est aussi représenté. Ces deux forces E et P doivent être calculées et comparées lors de chaque opération de bridage de façon à ce que le couple de retenue R de la partie 31, autour d'un axe horizontal X-X' passant par une arête inférieure du moule, soit suffisant, afin d'éviter le basculement de cette partie 31.

Par ailleurs, le mouvement du plateau mobile 12 est dirigé par l'intermédiaire de quatre axes de guidage. Seulement trois de ces axes que l'on note 28a, 28b, 28c sont représentés sur les figures 2 et 4, afin de mieux observer la face de bridage 21 a.

Des bobinages de puissance sont enroulés autour des aimants permanents des plots 5, ils permettent d'inverser la polarité des aimants des plots 5 par une brève alimentation en courant, dans un sens ou dans un autre, selon si l'on souhaite magnétiser ou démagnétiser la surface d'une pièce ferromagnétique en contact avec un plot. Les aimants des plots 5 génèrent un champ magnétique dont les lignes de flux peuvent s'étendre vers l'extérieur des plots 5, c'est-à-dire vers l'extérieur de la plaque 21. Lorsque les plots 5 de la plaque 21 sont dans l'état dit activé, les lignes de flux sont susceptibles de se fermer en passant, depuis la plaque 21, à travers la partie 31 du moule à brider, la plaque 21 exerçant alors un effort de bridage sur cette partie.

Lorsque les bobinages de puissance sont alimentés de manière adéquate, ils génèrent un nouveau champ magnétique opposé au champ magnétique des aimants. On passe alors dans un état désactivé, dans lequel les lignes de flux sont confinées dans la plaque 21, l'effort de bridage exercé par la plaque 21 sur la partie 31 est alors nul. Les circuits formés par les bobinages de puissance des plots 5 demeurent connus de l'état de l'art et forment les circuits de puissance qui ne sont pas représentés dans cette invention.

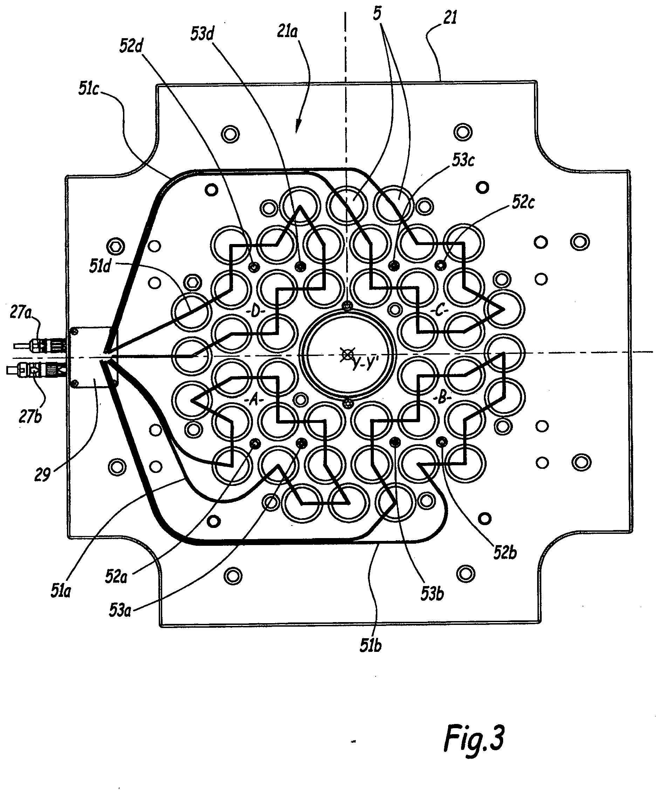

A la figure 3, on observe la face de bridage 21a, de la plaque de bridage 21. On distingue, plus particulièrement quatre circuits 51 a, 51 b, 51 c et 51 d distincts qui relient quatre groupes de plots 5 distincts. Ces circuits 51 a, 51 b, 51 c, 51 d sont formés par association en série de bobinages non représentés de mesure des flux traversant les plots 5. Ces circuits permettent de mesurer les flux traversant les plots 5 auxquels ils sont associés et comprennent chacun le même nombre de plots, c'est-à-dire onze plots dans l'exemple. Chaque circuit de mesure 51 a, 51 b, 51 c, 51 d est connecté à un bornier 29 lui-même relié à l'unité de contrôle 23 de bridage par l'intermédiaire des câbles 26a, 26b.

L'unité 23 de contrôle du bridage comporte un calculateur ou des circuits de traitement de signaux de mesure de flux issus des circuits 51a, 51b, 51c, 51 d en vue d'estimer l'effort de bridage exercé par les plots 5 compris dans ces différents circuits 51 a, 51 b, 51 c, 51 d de mesure, sur une partie 31 de moule à brider. Les circuits 51 a, 51 b, 51 c, 51 d de mesure permettent de couvrir la surface de bridage par zones et d'avoir une connaissance des conditions de bridage par zone et non plus uniquement des conditions de bridage sur la plaque 21 de bridage entière. On détermine les conditions de bridage d'une installation de dispositif avec un moule de façon plus précise qu'avec les systèmes connus.

De plus, des détecteurs de présence 52a, 52b, 52c, 52d d'un moule ou d'un objet sur la plaque 21 de bridage sont présents dans chaque zone correspondant à un circuit 51 a, 51 b, 51 c, 51 d de mesure.

De même, des capteurs de température 53a, 53b, 53c, 53d sont présents dans chaque zone correspondant à un circuit 51 a, 51 b, 51 c, 51 d de mesure.

A la figure 3, la plaque 21 comprend quatre capteurs de température 53a, 53b, 53c, 53d qui sont chacun présents dans une zone définie par un circuit de mesure 51a, 51b, 51c, 51 d différent. Il va de même pour les détecteurs de présence 52a, 52b, 52c, 52d. On a donc une connaissance de la température par zones et de la présence ou de l'absence d'une portion du moule en regard de chaque zone de mesure. On note, A, B, C, D les quatre zones formées par les plots 5 des quatre circuits de mesure 51 a, 51b, 51c, 51d.

Afin de contrôler le bridage magnétique, un procédé de contrôle est mis en place grâce à l'unité 23 de contrôle du bridage. A partir des zones de mesure A, B, C, D on détermine en début de procédé quatre zones de traitement Za, Zb, Zc, Zd au cours d'une première étape 100. On détermine ainsi la zone de traitement Za qui correspond approximativement à un quadrant de 90° situé dans un coin inférieur gauche de la plaque 21 par rapport à un axe Y-Y' passant par le centre de la plaque 21 et le long duquel le plateau 12 est en mouvement par rapport au plateau 11. La zone Za correspond aux plots compris dans le circuit 51 a.

De la même manière, on détermine les zones de traitement Zb, Zc et Zd qui correspondent respectivement et approximativement à un quadrant inférieur droit, un quadrant supérieur droit et un quadrant supérieur gauche de la plaque 21 et aux plots compris dans les circuits 51 b, 51 c, 51 d.

Une seconde étape 101 pour ce procédé consiste à faire en sorte que le calculateur de l'unité 23 de contrôle du bridage intègre des fichiers qui contiennent des paramètres caractéristiques des plaques 21, 22 et des informations sur la configuration des plaques 21 et 22, c'est-à-dire la localisation des plots 5, leur appartenance aux circuits de mesure 51 a, 51 b, 51 c, 51 d, et sur les paramètres caractéristiques du moule, en particulier de sa partie 31, c'est-à-dire son poids P et son centre de gravité. Le calculateur intègre également les dimensions du moule, s'il a une surface en regard de la plaque 21 de forme simple, par exemple circulaire ou rectangulaire, voire polygonale. Une opération supplémentaire consiste à calculer, à l'aide du calculateur de l'unité 23 et sur la base des dimensions renseignées du moule, la surface du moule 31 en regard de la plaque 21. En revanche si la surface de contact de la partie 31 du moule est de forme complexe, c'est-à-dire qu'il s'agit par exemple d'une surface à bords courbes, non en arc de cercle, ou d'une surface composée de plusieurs portions disjointes, le calculateur de l'unité 23 de contrôle exploitera directement des fichiers extérieurs au calculateur définissant la surface du moule de la partie 31 en regard de la plaque 21.

Lors d'une étape 102, le calculateur définit une surface S de la plaque de bridage 21 et des plots 5, en contact avec le moule 31 à partir des calculs de surface réalisés à l'étape 101.

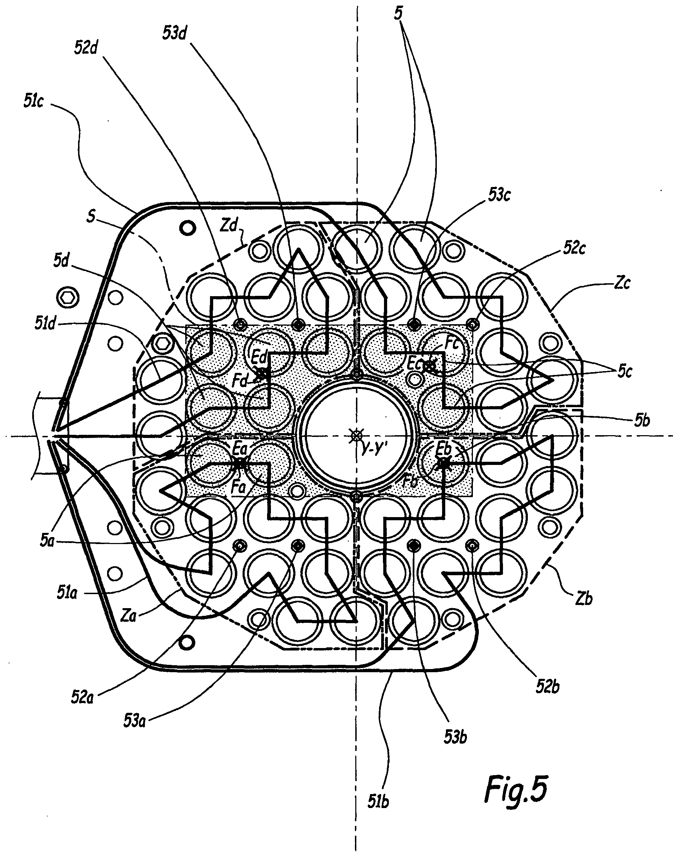

A la figure 5, la surface S de contact de la plaque de bridage 21 et de ses plots magnétiques 5 avec la pièce à brider 31 est représentée par la zone grisée sauf au niveau de certaines références Ea à Ed et Fa à Fd mentionnées ci-après pour la clarté du dessin. Cette surface S contient onze plots magnétique 5 et n'est qu'un exemple du type de surface de contact possible. On note 5a, 5b, 5c, 5d des plots compris dans la surface S et appartenant respectivement aux circuits de mesure 51a, 51b, 51c, 51 d. Les zones Za, Zb, Zc, Zd comprennent respectivement deux, un, trois et cinq plots 5a, 5b, 5c, 5d en contact avec la partie de moule 31.

Ensuite, lors d'une étape 103, l'identification du ou des plots compris dans la surface S est effectuée pour chaque circuit 51 a, 51 b, 51 c, 51 d à partir de la localisation des plots 5 sur la plaque 21 et de la définition de la surface S. Cette étape permet également au calculateur d'évaluer les surfaces couvertes des plots compris dans la surface S, et plus précisément les surfaces des pôles externes des plots magnétiques couverts.

Une étape 105 suivante lors de la magnétisation de la pièce à brider 31 suite à l'activation des plots magnétiques 5 de la plaque 21, est l'acquisition par l'intermédiaire des différents capteurs 53a, 53b, 53c, 53d des mesures de température pour chaque zone de mesure A, B, C, D et des mesures de flux magnétique pour chaque circuit de mesure 51a, 51b, 51c, 51d. Le calculateur relève le flux magnétique produit par les plots 5a, 5b, 5c, 5d compris dans la surface S.

Lors du procédé de contrôle du bridage magnétique d'une partie du moule 31, une étape 106 consiste à calculer un effort magnétique réel Ea, Eb, Ec, Ed de bridage pour chaque zone de traitement Za, Zb, Zc, Zd sur la base de la mesure de flux magnétique par circuit de mesure 51 a, 51 b, 51 c, 51 d de l'étape 105, de l'identification effectuée lors de l'étape 103, de la détermination des zones de traitement Za, Zb, Zc, Zd à l'étape 100 et de la définition de la surface S faite à l'étape 102.

En effet, on sait qu'un flux magnétique négligeable traverse les plots magnétiques 5 lorsque ceux-ci ne sont pas magnétisés. Lorsque la plaque 21 est magnétisée, l'unité de contrôle 23 réceptionne les signaux de mesure des circuits de mesure 51 a, 51 b, 51 c, 51 d qui relèvent une variation du flux magnétique qui traverse les plots 5a, 5b, 5c, 5d au niveau des zones de mesure A, B, C, D couvertes par la pièce à brider.

En considérant le voltage de sortie du circuit de mesure, la surface de contact de la plaque de bridage 21 et de ses plots magnétiques 5 et la surface magnétique des plots magnétiques il est possible d'en déduire le flux magnétique réel et l'effort de bridage produits par la plaque de bridage 21.

En effet si l'on définit S' comme l'aire de la surface magnétisée par les plots d'un circuit de mesure 51 a, 51b, 51c, 51 d, Bₘ comme la densité du flux magnétique à travers cette zone de mesure, et µ₀ la perméabilité de l'air, on sait facilement en déduire l'effort magnétique réel de bridage des plots E :
- on déduit la densité du flux magnétique Bₘ à partir de la formule de variation de flux magnétique appliquée à chaque plot magnétique : Δϕ = - (∫ε dt) / N avec ε le voltage de sortie d'une bobine de mesure, Δϕ la variation de flux magnétique, et N le nombre de spires autour d'un plot magnétique.
- on en obtient alors E = Bₘ² . S' / (2 µ₀)

A noter que l'aire de la surface magnétisée à considérer pour ce calcul est la somme des aires des surfaces des pôles externes des plots magnétiques et l'aire de la surface de la plaque couverte par la pièce à brider.

La plaque de bridage 21 disposant de zones de mesure A, B, C, D qui définissent des zones de traitement Za, Zb, Zc, Zd, on définit de manière théorique le point d'application Fa, Fb, Fc, Fd de l'effort magnétique réel Ea, Eb, Ec, Ed de bridage pour chaque zone de traitement Za, Zb, Zc, Zd lors d'une étape 107. Ce point est calculé à partir de l'identification des plots compris dans la surface S. Il s'agit du barycentre des surfaces couvertes des plots 5a, 5b, 5c, 5d identifiés à l'étape 103 pour chaque zone de traitement Za, Zb, Zc, Zd.

L'étape 107 consiste donc à calculer pour chaque zone de traitement Za, Zb, Zc, Zd le point d'application de l'effort magnétique réel Ea, Eb, Ec, Ed sur la base du calcul du barycentre Fa, Fb, Fc, Fd des surfaces couvertes des plots 5a, 5b, 5c, 5d identifiés à l'étape 103. En revanche si la surface de contact de la partie 31 du moule est de forme complexe, le calculateur de l'unité de contrôle exploite des fichiers extérieurs à l'unité de contrôle définissant les barycentres des surfaces couvertes des plots 5a, 5b, 5c, 5d. Le système extérieur tel que l'outil CAO peut alors communiquer ces fichiers au calculateur de l'unité de contrôle 23.

Grâce à l'identification de l'étape 103 et à la définition de la surface S faite à l'étape 102, lors d'une étape 108 le calculateur de l'unité 23 de contrôle du bridage calcule l'effort théorique E'a, E'b, E'c, E'd de bridage magnétique pour chaque zone de traitement Za, Zb, Zc, Zd. Il s'agit de l'effort théorique ou effort cible qu'une zone de traitement Za, Zb, Zc, Zd est censée générer en conditions normales.

Dans une étape 112, le calculateur réalise la comparaison des efforts magnétiques de bridage réels Ea, Eb, Ec, Ed avec les efforts théoriques E'a, E'b, E'c, E'd pour chaque zone de traitement Za, Zb, Zc, Zd en établissant les différences absolues ou relatives entre les deux valeurs de force. L'écart de force calculé permet de mettre en évidence notamment les pertes magnétiques par circuit 51a, 51b, 51c, 51 d. Puis la comparaison de cet écart avec une valeur de seuil, fixée à l'avance, est effectuée au cours d'une étape 114 ; autrement dit l'étape 114 revient à établir que le résultat de la comparaison des efforts magnétiques de bridage réels Ea, Eb, Ec, Ed avec les efforts théoriques E'a, E'b, E'c, E'd pour chaque zone de traitement Za, Zb, Zc, Zd satisfait un critère d'arrêt fixé à l'avance. Dans le cas où l'écart relevé est supérieur à cette valeur un défaut de magnétisation est détecté. L'unité 23 transmet un signal ou un message à l'opérateur pour l'informer qu'une zone de traitement réalise mal sa fonction de magnétisation et qu'il existe un risque de dysfonctionnement du dispositif. L'unité de bridage signale l'identifiant de la zone de traitement qui fait défaut à un équipement de l'installation. La procédure de bridage s'arrête, l'installation entre dans un mode de panne pour interdire la poursuite des opérations et maintenir des conditions de sécurité de l'installation. La valeur du seuil, soit le critère d'arrêt du défaut de force, peut par exemple être fixée à 90% de la valeur nominale de flux magnétique produit par un ensemble de plots magnétiques liés à un circuit de mesure.

Le relevé de la température pour chaque circuit permet d'anticiper certains défaut de qui peuvent être liés au changement de température et d'approcher une évaluation plus fine des valeurs Ea, Eb, Ec, Ed, de l'effort magnétique réel de bridage par circuit 51 a, 51b, 51c, 51 d. En effet, un aimant peut perdre ses capacités magnétiques avec des changements de conditions environnantes, telles que la température.

Parallèlement au calcul des efforts par circuit, l'unité 23 est capable dans une étape 109 de calculer, à partir des résultats des calculs des étapes 106 et 107, le couple de maintien des efforts réels exercé par les plots compris dans la surface S pour chaque zone de traitement Za, Zb, Zc, Zd.

Par la suite, sont calculés, d'une part lors d'une étape 110 qui fait suite à l'étape 109, la somme R des couples de maintien des efforts magnétiques réels de bridage autour de l'axe X-X' et, d'autre part lors d'une étape 111, le couple de basculement K déduit des valeurs connues de l'étape 101 : le poids P de la partie 31 de moule et la position de son centre de gravité par rapport à son axe de basculement.

L'unité 23 peut ainsi, par la suite et au cours d'une étape 113, comparer les deux couples R et K en établissant les différences absolues ou relatives entre les deux valeurs de couple; puis lors de l'étape 114 calculer le rapport entre les deux couples R et K et vérifier qu'il n'atteint pas un seuil fixé à l'avance, ce qui permet de donner une évaluation du risque de basculement du moule par rapport à des efforts réels de bridage; autrement dit l'étape 114 permet également d'établir que le résultat de la comparaison entre les deux couples R et K satisfait un critère d'arrêt fixé à l'avance. L'opérateur peut ainsi être prévenu du risque de basculement du moule. La valeur du seuil, soit le critère d'arrêt lié au basculement, peut être fixée à 10 c'est-à-dire que si le rapport du couple de maintien sur le couple de basculement est inférieur à 10, alors l'unité 23 transmet, au cours de l'étape 114, un signal ou un message à un équipement accessible à l'opérateur pour l'informer d'un risque de basculement de la partie 31 de moule. La procédure de bridage s'arrête, l'installation entre dans un mode de panne pour interdire la poursuite des opérations et maintenir des conditions de sécurité de l'installation.

Si les conditions nécessaires pour un bridage sécurisé du moule sont rassemblées, l'opérateur en est informé, il peut ainsi poursuivre le décrochage du moule d'un palan et lancer les opérations de production de pièces injectées.

A chaque opération de magnétisation des plaques l'opérateur peut être informé du défaut de magnétisation d'une zone de traitement Za, Zb, Zc, Zd - et la zone faisant défaut peut être signalée par son identifiant - ou du risque de basculement de la pièce à brider grâce à ce procédé. Le dispositif 2 communique à l'installation 1 les résultats des opérations de comparaison par zone de traitement Za, Zb, Zc, Zd, ce qui peut provoquer l'affichage de messages ou l'activation de quelque moyen d'alerte sur un équipement de l'installation, tel qu'un pupitre de commande, au dépassement de seuils de valeurs de force de magnétisation et de couple de maintien précédemment analysées.

L'unité 23 de contrôle du bridage contrôle à chaque procédure de bridage magnétique l'effort de bridage exercé par chaque plaque 21, 22 sur la partie du moule 31 correspondante suivant le même procédé que celui décrit précédemment, les deux plaques 21, 22 étant globalement similaires.

En complément, les zones de traitement Za, Zb, Zc, Zd, ne présentent pas d'intersection entre elles et une zone Za, Zb, Zc, Zd, ne peut en inclure d'autres. Il est ainsi avantageux que les points d'application Fa, Fb, Fc, Fd des efforts magnétiques réels respectifs Ea, Eb, Ec, Ed de chaque zone Za, Zb, Zc, Zd, ne soient pas confondus et que tous ne soient pas contenus dans un même plan horizontal, si bien que l'unité de contrôle 23 peut analyser et comparer la contribution des efforts magnétiques réels Ea, Eb, Ec, Ed de bridage des zones de traitement Za, Zb, Zc, Zd, choisies, pour le maintien du moule et à l'encontre de son basculement. L'homme du métier comprend en effet aisément que la perte des efforts magnétiques réels Ea, Eb, Ec, Ed de bridage sur la partie supérieure du moule augmente d'avantage le risque de basculement et conduit à une situation de maintien plus critique qu'une perte équivalente des efforts magnétiques réels Ea, Eb, Ec, Ed sur la partie inférieure du moule. C'est pourquoi le procédé de bridage de moule analyse les efforts réels Ea, Eb, Ec, Ed de bridage en tenant compte de la position des points d'application Fa, Fb, Fc, Fd des efforts magnétiques réels Ea, Eb, Ec, Ed de chaque zone de traitement Za, Zb, Zc, Zd sur la plaque 21.

En variante, le calculateur peut calculer au cours de l'étape 106, les efforts magnétiques réels corrigés de l'influence de la température mesurée lors de l'étape 105.

Selon une autre variante, l'étape 102 peut être réalisée par un système extérieur tel qu'un outil CAO dans lequel la représentation CAO de la partie 31 et de la plaque 21 est enregistrée, et la surface S de la plaque de bridage 21 et des plots 5 en contact avec le moule 31 est définie avant d'être transmise au calculateur de l'unité de contrôle de bridage magnétique.

Selon une autre variante de l'étape 107, un système extérieur au dispositif de bridage, tel que l'outil CAO, calcule le point d'application Fa, Fb, Fc, Fd de l'effort magnétique réel Ea, Eb, Ec, Ed pour chaque zone de traitement Za, Zb, Zc, Zd et il communique le point d'application Fa, Fb, Fc, Fd de l'effort magnétique réel Ea, Eb, Ec, Ed pour chaque zone de traitement Za, Zb, Zc, Zd à l'unité 23 de contrôle du bridage magnétique. L'invention n'est pas limitée à l'exemple décrit et représenté. En variante, des éléments de l'unité 23 de contrôle de bridage, en particulier le calculateur, pourront être disposés à l'extérieur de l'unité 23 de contrôle. Par exemple le calculateur pourra être intégré directement dans l'unité 13 de contrôle de la presse à injecter.

L'invention prévoit également un support d'enregistrement qui sauvegarde l'ensemble de données et résultats relatifs aux calculs et comparaisons des efforts théoriques E'a, E'b, E'c, E'd et des efforts magnétiques réels Ea, Eb, Ec, Ed de bridage par zone de traitement Za, Zb, Zc, Zd précédemment décrits, et pour une configuration de moule donnée.

En variante, au lieu de comprendre quatre circuits 51 a, 51 b, 51 c, 51 d de mesure, le dispositif 2 comprend deux circuits de mesure, disposés l'un au-dessus de l'autre par rapport à un plan Q perpendiculaire au poids P de la partie 31 de moule, ou trois circuits ou plus de cinq circuits. A la figure 2, le plan Q passe par le centre de la plaque et le circuit 51d de mesure est au-dessus du circuit 51 a de mesure par rapport au plan Q.

Selon une autre variante, chaque circuit de mesure peut comprendre un nombre différent de plots.

Selon encore une autre variante, une mesure du flux magnétique est faite pour chaque plot 5 dans une zone de mesure, il y a donc un circuit de mesure par plot.

En variante, la face du moule destinée à être en contact avec la face 21 a de la plaque 21 n'est pas plane. Dans ce cas, la surface de contact S du moule avec la plaque 21 peut être, par exemple, la somme de plusieurs surfaces distinctes, voire disjointes, en contact avec la plaque 21 et son aire est inférieure à celle de la face du moule en regard de la plaque 21.

Le dispositif 2 de bridage magnétique a été décrit dans le cadre d'une machine de moulage par injection. Cependant, un tel dispositif 2 est transposable dans de nombreuses autres applications et, notamment, pour des installations industrielles nécessitant le bridage de pièces avec un effort important, réversible et contrôlé, telles que le levage par bridage magnétique ou la mise en position de pièces ferromagnétiques à usiner.

Dans une autre variante non représentée, le procédé pourra être employé sur un dispositif tel que la magnétisation de la surface de la pièce à brider se réalise par l'appairage de couple de plots à polarité inversée dont l'activation permet de magnétiser une pièce ferromagnétique positionnée sur leurs deux faces. Les lignes de flux sont alors générées entre les plots activés par paire à travers la pièce à brider par l'activation du ou des circuits de puissance des plots.

En variante, et dans le cadre de l'invention, il est prévu que certaines étapes soient réalisées dans un ordre différent du mode de réalisation décrit ci-dessus, ou soient traitées de façon parallèle. Par exemple, il peut être envisageable de déterminer les zones de traitement au cours d'une étape 100 de façon parallèle à la réalisation d'une étape 102 de définition de la surface S de contact entre la plaque et la pièce à brider.

Les différentes variantes décrites ci-dessus peuvent être combinées entre elles totalement ou partiellement, pour donner lieu à d'autres modes de réalisation de l'invention.

## Revendications

1. Procédé de contrôle du bridage magnétique d'une pièce (31) dans un dispositif de bridage magnétique (2) d'une installation industrielle (1) comprenant, une unité (23) de contrôle du bridage magnétique, une plaque (21) de bridage sur laquelle est positionnée la pièce à brider (31), plusieurs plots magnétiques (5) logés dans cette plaque (21), les plots étant reliés à des circuits (51a, 51b, 51c, 51d) de mesure du flux magnétique définissant des zones de mesure (A, B, C, D) et à des circuits de puissance permettant de magnétiser ou démagnétiser les plots (5),
**caractérisé**
**en ce que** le procédé comprend des étapes préalables consistant à :
- a) déterminer (100) au moins deux zones (Za, Zb, Zc, Zd) de traitement définie chacune par au moins une zone de mesure (A, B, C, D)
- b) définir (102) une surface (S) de la plaque de bridage (21) en contact avec la pièce à brider (31) et
**en ce que** le procédé comprend pour chaque zone de traitement (Za, Zb, Zc, Zd), des étapes consistant à :
- c) identifier (103) un ou des plots magnétiques (5a, 5b, 5c, 5d) compris dans la surface (S) de la plaque de bridage (21) en contact avec la pièce à brider (31),
- d) mesurer (105) le flux magnétique produit par le ou les plots (5a, 5b, 5c, 5d) identifiés à l'étape c)
- e) calculer (106) un effort magnétique réel (Ea, Eb, Ec, Ed) de bridage sur la base de la mesure de l'étape d), de la définition de la surface (S) en contact faite à l'étape b) et de l'identification des plots (5a, 5b, 5c, 5d) faite à l'étape c),
- f) calculer (108) un effort magnétique théorique (E'a, E'b, E'c, E'd) grâce à la définition de la surface (S) en contact faite à l'étape b) et l'identification des plots (5a, 5b, 5c, 5d) faite à l'étape c),
- g) comparer (112) l'effort magnétique réel de bridage (Ea, Eb, Ec, Ed) et l'effort magnétique théorique (E'a, E'b, E'c, E'd) calculés aux étapes e) et f), et
- m) établir (114) que le résultat de la comparaison réalisée à l'étape g) satisfait un critère d'arrêt correspondant à la détection d'un défaut de magnétisation d'une zone de traitement (Za, Zb, Zc, Zd) ou d'un risque de basculement de la pièce à brider (31).

2. Procédé selon la revendication 1, **caractérisé en ce qu'**il comporte des étapes consistant pour chaque zone de traitement (Za, Zb, Zc, Zd), à :
- h) calculer (107) un point d'application (Fa, Fb, Fc, Fd) de l'effort magnétique réel (Ea, Eb, Ec, Ed) en considérant le barycentre des surfaces couvertes des plots (5a, 5b, 5c, 5d) identifiés à l'étape c),
- i) calculer (109) un couple de maintien de l'effort magnétique réel (Ea, Eb, Ec, Ed) à partir des résultats des calculs des étapes e) et h).

3. Procédé selon la revendication 2, **caractérisé en ce qu'**il comporte des étapes consistant à :
- j) calculer (111) le couple (K) théorique de basculement de la pièce sur la base de paramètres caractéristiques de la pièce à brider (31) et de paramètres caractéristiques de la plaque de bridage (21),
- k) comparer (113) une somme (R) des couples de maintien des efforts magnétiques réels (Ea, Eb, Ec, Ed) calculés (109) pour chaque zone de traitement (Za, Zb, Zc, Zd) au cours de l'étape i) au couple (K) théorique de basculement calculé à l'étape j).

4. Procédé selon la revendication 1, **caractérisé en ce qu'**il comporte une étape consistant à :- n) activer un moyen d'alerte ou d'affichage sur l'installation (1) si le critère est satisfait lors de l'étape m).

5. Procédé selon la revendication 1, **caractérisé en ce qu'**il comporte une étape consistant à :
- o) signaler la zone de traitement (Za, Zb, Zc, Zd) à un équipement de l'installation (1) si le critère d'arrêt correspondant à la détection d'un défaut de magnétisation de cette zone de traitement (Za, Zb, Zc, Zd) est satisfait lors de l'étape m).

6. Procédé selon l'une des revendications précédentes, **caractérisé en ce que** :
- au cours de l'étape d), la température est mesurée (105) par un capteur au niveau de la surface (21a) de bridage pour chaque zone de mesure (A, B, C, D)
- au cours de l'étape e), l'effort magnétique de bridage réel corrigé de l'influence de la température mesurée est aussi calculé pour chaque zone de mesure (A, B, C, D).

7. Procédé selon l'une des revendications précédentes, **caractérisé**
- **en ce que** avant l'étape b) un système extérieur au dispositif de bridage, comprenant une représentation de la pièce (31) et de la plaque de bridage (21) mémorise (101) des paramètres caractéristiques de la pièce à brider et de la plaque de bridage
- et **en ce que** lors de l'étape b) le système extérieur communique la définition de la surface (S) de la plaque de bridage en contact avec la pièce à brider à l'unité (23) de contrôle de bridage magnétique.

8. Procédé selon la revendication 2 ou 3, **caractérisé en ce que**, au cours de l'étape h), un système extérieur au dispositif de bridage calcule (107) le point d'application (Fa, Fb, Fc, Fd) de l'effort magnétique théorique (E'a, E'b, E'c, E'd) pour chacune des zones de traitement (Za, Zb, Zc, Zd) et communique ce point d'application (Fa, Fb, Fc, Fd) à l'unité (23) de contrôle du bridage magnétique.

9. Procédé selon l'une des revendications précédentes, **caractérisé en ce qu'**il consiste à sauvegarder sur un support d'enregistrement les résultats de calculs et de comparaisons des efforts théoriques (E'a, E'b, E'c, E'd) et des efforts magnétiques réels (Ea, Eb, Ec, Ed) de bridage par zone de traitement (Za, Zb, Zc, Zd).

10. Dispositif de bridage magnétique (2), **caractérisé en ce qu'**il comprend des moyens (23) destinés à mettre en oeuvre un procédé selon l'une des revendications précédentes et **en ce que** la plaque (21) de bridage comprend au moins deux circuits (51a, 51d) de mesure disposés l'un au-dessus de l'autre par rapport à un plan (Q) perpendiculaire au poids (P) de la pièce à brider.

11. Dispositif selon la revendication 10, **caractérisé en ce que** le dispositif comprend quatre circuits (51a, 51b, 51c, 51d) de mesure, qui divisent la plaque (21) de bridage en quatre zones de traitement (Za, Zb, Zc, Zd).

12. Dispositif selon l'une des revendications 10 ou 11, **caractérisé en ce que** le dispositif comprend un circuit (51a, 51b, 51c, 51d) de mesure par plot (5).

## Patentansprüche

1. Verfahren zum Steuern des magnetischen Aufspannens eines Teils (31) in einem Magnet-Schnellspannsystem einer industriellen Anlage (1), umfassend eine Einheit (23) zum Steuern des magnetischen Aufspannens, eine Aufspannplatte (21), auf der das aufzuspannende Teil (31) positioniert ist, mehrere Magnetblöcke (5), die in dieser Platte (21) aufgenommen sind, wobei die Magnetblöcke mit Messkreisen (51a, 51b, 51c, 51d) zur Messung des Magnetflusses, die Messzonen (A, B, C, D) definieren, und mit Leistungskreisen verbunden sind, die eine Magnetisierung oder eine Entmagnetisierung der Blöcke (5) ermöglichen, **dadurch gekennzeichnet, dass** das Verfahren vorangehende Schritte umfasst, die darin bestehen:
- a) mindestens zwei Behandlungszonen (Za, Zb, Zc, Zd) zu bestimmen (100), die jeweils durch mindestens eine Messzone (A, B, C, D) definiert sind,
- b) eine Kontaktfläche (S) der Aufspannplatte (21) mit dem aufzuspannenden Teil (31) zu definieren (102), und
dass das Verfahren für jede Behandlungszone (Za, Zb, Zc, Zd) Schritte umfasst, die darin bestehen:
- c) einen oder mehrere Magnetblöcke (5a, 5b, 5c, 5d) zu identifizieren (103), die in der Kontaktfläche (S) der Aufspannplatte (21) mit dem aufzuspannenden Teil (31) enthalten sind,
- d) den von dem oder den Blöcken (5a, 5b, 5c, 5d), die im Schritt c) identifiziert sind, erzeugten Magnetfluss zu messen (105),
- e) eine reale Magnetaufspannkraft (Ea, Eb, Ec, Ed) auf der Grundlage der Messung in Schritt d), aus der im Schritt b) durchgeführten Definition der Kontaktfläche (S) und der im Schritt c) durchgeführten Identifizierung der Blöcke (5a, 5b, 5c, 5d) zu berechnen (106),
- f) eine theoretische Magnetkraft (E'a, E'b, E'c, E'd) mittels der im Schritt b) durchgeführten Definition der Kontaktfläche (S) und der im Schritt c) durchgeführten Identifizierung der Blöcke (5a, 5b, 5c, 5d) zu berechnen (108),
- g) die reale Magnetaufspannkraft (Ea, Eb, Ec, Ed) und die theoretische Magnetkraft (E'a, E'b, E'c, E'd), die in den Schritten e) und f) berechnet wurden, zu vergleichen (112),
- m) festzustellen (114), dass das Ergebnis des im Schritt g) durchgeführten Vergleichs ein Anhaltekriterium erfüllt, das einem Detektieren eines Magnetisierungsfehlers einer Behandlungszone (Za, Zb, Zc, Zd) oder einem Risiko des Kippens des aufzuspannenden Teils (31) entspricht.

2. Verfahren nach Anspruch 1, **dadurch gekennzeichnet, dass** es für jede Behandlungszone (Za, Zb, Zc, Zd) Schritte aufweist, die darin bestehen:
- h) einen Angriffspunkt (Fa, Fb, Fc, Fd) der realen Magnetkraft (Ea, Eb, Ec, Ed) zu berechnen (107), indem der Schwerpunkt der im Schritt c) identifizierten, von den Blöcken (5a, 5b, 5c, 5d) bedeckten Flächen berücksichtigt wird,
- i) ein Haltemoment der realen Magnetkraft (Ea, Eb, Ec, Ed) aus den Ergebnissen der Schritte e) und h) zu berechnen (109).

3. Verfahren nach Anspruch 2, **dadurch gekennzeichnet, dass** es Schritte aufweist, die darin bestehen:
- j) das theoretische Kippmoment (K) des Teils auf der Grundlage von charakteristischen Parametern des aufzuspannenden Teils (31) und von charakteristischen Parametern der Aufspannplatte (21) zu berechnen (111),
- k) eine Summe (R) der Haltemomente der realen Magnetkräfte (Ea, Eb, Ec, Ed), die für jede Behandlungszone (Za, Zb, Zc, Zd) in dem Schritt i) berechnet wurden (109), mit dem im Schritt j) berechneten theoretischen Kippmoment (K) zu vergleichen (113).

4. Verfahren nach Anspruch 1, **dadurch gekennzeichnet, dass** es einen Schritt aufweise, der darin besteht:
- n) ein Alarmmittel oder Anzeigemittel an der Anlage (1) zu aktivieren, wenn das Kriterium bei Schritt m) erfüllt ist.

5. Verfahren nach Anspruch 1, **dadurch gekennzeichnet, dass** es einen Schritt aufweist, der darin besteht:
- o) die Behandlungszone (Za, Zb, Zc, Zd) einer Einrichtung der Anlage (1) zu signalisieren, wenn das Anhaltekriterium, das der Detektion eines Magnetisierungsfehlers dieser Behandlungszone (Za, Zb, Zc, Zd) entspricht, bei Schritt m) erfüllt ist.

6. Verfahren nach einem der vorhergehenden Ansprüche, **dadurch gekennzeichnet, dass**
- während des Schritts d) für jede Messzone (A, B, C, D) die Temperatur von einem Messaufnehmer an der Aufspannfläche (21a) gemessen wird (105),
- während des Schritts e) die reale Magnetaufspannkraft, korrigiert um den Einfluss der gemessenen Temperatur, auch für jede Messzone (A, B, C, D) gemessen wird.

7. Verfahren nach einem der vorhergehenden Ansprüche, **dadurch gekennzeichnet, dass**
- vor dem Schritt b) ein zu der Aufspannvorrichtung externes System, das eine Darstellung des Teils (31) und der Aufspannplatte (21) umfasst, kennzeichnende Parameter des aufzuspannenden Teils und der Aufspannplatte speichert (101), und dass
- bei Schritt b) das externe System die Definition der Kontaktfläche (S) der Aufspannplatte mit dem aufzuspannenden Teil an die Einheit (23) zur Steuerung des magnetischen Aufspannens kommuniziert.

8. Verfahren nach Anspruch 2 oder 3, **dadurch gekennzeichnet, dass** während des Schritts h) ein zu der Aufspannvorrichtung externes System den Angriffspunkt (Fa, Fb, Fc, Fd) der theoretischen Magnetkraft (E'a, E'b, E'c, E'd) für jede der Behandlungszonen (Za, Zb, Zc, Zd) berechnet (107) und diesen Angriffspunkt (Fa, Fb, Fc, Fd) an die Einheit (23) zum Steuern des magnetischen Aufspannens kommuniziert.

9. Verfahren nach einem der vorhergehenden Ansprüche, **dadurch gekennzeichnet, dass** es darin besteht, auf einem Datenträger die Berechnungs- und Vergleichsergebnisse der theoretischen Kräfte (E'a, E'b, E'c, E'd) und der realen Magnetaufspannkräfte (Ea, Eb, Ec, Ed) pro Behandlungszone (Za, Zb, Zc, Zd) zu sichern.

10. Magnetische Aufspannvorrichtung (2), **dadurch gekennzeichnet, dass** sie Mittel (23) umfasst, die vorgesehen sind, das Verfahren nach einem der vorhergehenden Ansprüche durchzuführen und dass die Aufspannplatte (21) mindestens zwei Messkreise (51a, 51b) umfasst, die in Bezug auf eine Ebene (Q) senkrecht zu dem Gewicht (P) des aufzuspannenden Teils übereinander angeordnet sind.

11. Vorrichtung nach Anspruch 10, **dadurch gekennzeichnet, dass** die Vorrichtung vier Messkreise (51a, 51b, 51c, 51d) umfasst, die die Aufspannplatte (21) in vier Behandlungszonen (Za, Zb, Zc, Zd) aufteilt.

12. Vorrichtung nach einem der Ansprüche 10 oder 11, **dadurch gekennzeichnet, dass** die Vorrichtung pro Magnetblock (5) einen Messkreis (51a, 51b, 51c, 51d) umfasst.

## Claims

1. Method for controlling the magnetic clamping of a part (31) in a magnetic clamping device (2) of an industrial installation (1) comprising a unit (23) for controlling the magnetic clamping, a clamping plate (21) whereon is positioned the part to be clamped (31), several magnetic studs (5) housed in this plate (21), with the studs being connected to magnetic flux measuring circuits (51a, 51b, 51c, 51d) defining measuring zones (A, B, C, D) and to power circuits making it possible to magnetise or demagnetise the studs (5),
**characterised**
**in that** the method comprises prior steps consisting in:
- a) determining (100) at least two treatment zones (Za, Zb, Zc, Zd) each defined by at least one measuring zone (A, B, C, D),
- b) defining (102) a surface (S) of the clamping plate (21) in contact with the part to be clamped (31) and
**in that** the method comprises for each treatment zone (Za, Zb, Zc, Zd), steps consisting in:
- c) identifying (103) one or more magnetic studs (5a, 5b, 5c, 5d) included in the surface (S) of the clamping plate (21) in contact with the part to be clamped (31),
- d) measuring (105) the magnetic flux produced by the stud or studs (5a, 5b, 5c, 5d) identified in step c),
- e) calculating (106) an actual magnetic clamping force (Ea, Eb, Ec, Ed) based on the measurement of the step d), on the definition of the surface (S) in contact carried out in the step b) and on the identification of the studs (5a, 5b, 5c, 5d) carried out in the step c),
- f) calculating (108) a theoretical magnetic force (E'a, E'b, E'c, E'd) thanks to the definition of the surface (S) in contact carried out in the step b) and the identification of the studs (5a, 5b, 5c, 5d) carried out in the step c),
- g) comparing (112) the actual magnetic clamping force (Ea, Eb, Ec, Ed) and the theoretical magnetic force (E'a, E'b, E'c, E'd) calculated in steps c) and f), and
- m) establishing (114) that the result of the comparison carried out in the step g) satisfies a criterion for stoppage corresponding to the detection of a magnetisation defect of a treatment zone (Za, Zb, Zc, Zd) or of a risk of tipping of the part to be clamped (31).

2. Method according to claim 1, **characterised in that** it comprises steps consisting for each treatment zone (Za, Zb, Zc, Zd) in:
- h) calculating (107) a point of application (Fa, Fb, Fc, Fd) of the actual magnetic force (Ea, Eb, Ec, Ed) by considering the barycentre of the covered surfaces of the studs (5a, 5b, 5c, 5d) identified in the step c),
- i) calculating (109) a holding torque of the actual magnetic force (Ea, Eb, Ec, Ed) using the results of the calculations of the steps e) and h).

3. Method according to claim 2, **characterised in that** it comprises steps consisting in:
- j) calculating (111) the theoretical tipping torque (K) of the part based on characteristic parameters of the part to be clamped (31) and characteristic parameters of the clamping plate (21),
- k) comparing (113) a sum (R) of the holding torques of the actual magnetic forces (Ea, Eb, Ec, Ed) calculated (109) for each treatment zone (Za, Zb, Zc, Zd) during the step i) with the theoretical tipping torque (K) calculated in the step j).

4. Method according to claim 1, **characterised in that** it comprises a step consisting in: - n) activating a means of alert or display on the installation (1) if the criterion is satisfied during the step m).

5. Method according to claim 1, **characterised in that** it comprises a step consisting in:
- o) reporting the treatment zone (Za, Zb, Zc, Zd) to a piece of equipment of the installation (1) if the criterion for stoppage corresponding to the detection of a magnetisation defect of this treatment zone (Za, Zb, Zc, Zd) is satisfied during the step m).

6. Method according to one of the preceding claims, **characterised in that**:
- during the step d), the temperature is measured (105) by a sensor on the clamping surface (21a) for each measuring zone (A, B, C, D),
- during the step e), the actual magnetic clamping force corrected for the influence of the temperature measured is also calculated for each measuring zone (A, B, C, D).

7. Method according to one of the preceding claims, **characterised**
- **in that** before the step b) a system exterior to the clamping device, comprising a representation of the part (31) and of the clamping plate (21) memorises (101) characteristic parameters of the part to be clamped and of the clamping plate,
- and **in that** during the step b) the exterior system communicates the definition of the surface (S) of the clamping plate in contact with the part to be clamped to the unit (23) for controlling the magnetic clamping.

8. Method according to claim 2 or 3, **characterised in that**, during the step h), a system exterior to the clamping device calculates (107) the point of application (Fa, Fb, Fc, Fd) of the theoretical magnetic force (E'a, E'b, E'c, E'd) for each of the treatment zones (Za, Zb, Zc, Zd) and communicates this point of application (Fa, Fb, Fc, Fd) to the unit (23) for controlling the magnetic clamping.

9. Method according to one of the preceding claims, **characterised in that** it consists in saving on a recording medium the results of calculations and of comparisons of theoretical forces (E'a, E'b, E'c, E'd) and actual clamping forces (Ea, Eb, Ec, Ed) by treatment zone (Za, Zb, Zc, Zd).

10. Magnetic clamping device (2), **characterised in that** it comprises means (23) intended to implement a method according to one of the preceding claims and **in that** the clamping plate (21) comprises at least two measuring circuits (51a, 51d) arranged above one another in relation to a plane (Q) perpendicular to the weight (P) of the part to be clamped.

11. Device according to claim 10, **characterised in that** the device comprises four measuring circuits (51a, 51b, 51c, 51d), which divide the clamping plate (21) into four treatment zones (Za, Zb, Zc, Zd).

12. Device according to either claim 10 or claim 11, **characterised in that** the device comprises one measuring circuit (51a, 51b, 51c, 51d) per stud (5).
